Europäisches Patentamt

European Patent Office

Office européen des brevets

(19)

(11) EP 0 878 976 A1

(12) **EUROPÄISCHE PATENTANMELDUNG**

(43) Veröffentlichungstag:
18.11.1998 Patentblatt 1998/47

(51) Int. Cl.$^6$: **H04Q 7/36**, H04Q 7/22

(21) Anmeldenummer: 97107719.3

(22) Anmeldetag: 12.05.1997

(84) Benannte Vertragsstaaten:
DE

(71) Anmelder:
TELEFONAKTIEBOLAGET LM ERICSSON
126 25 Stockholm (SE)

(72) Erfinder:
• Stahl, Wolfgang
90542 Eckental (DE)

• Zimmermann, Gerd
90542 Eckental (DE)

(74) Vertreter: Mohsler, Gabriele
Ericsson Eurolab Deutschland GmbH,
Research Department,
Ericsson Allee 1
52134 Herzogenrath (DE)

(54) **Verfahren und Vorrichtung zur Auswahl von Frequenzwiederholungen in zellularen Kommunikationssystemen**

(57) Bei zwei sich überlagernden zellularen Kommunikationssystemen, die gemeinsame Frequenzen benutzen und bei denen bei der Frequenzplanung eines der zellularen Kommunikationssysteme das weitere zellularen Kommunikationssystem nicht berücksichtigt wurde, sollen dem weiteren zellulare Kommunikationssystem Frequenzen derart zugeordnet werden, daß sie keine Störung des ersten Systems verursachen und nur geringe Interferenzen verursachen.

Zur Ermittlung und Auswahl von Frequenzen wird ein Verfahren und eine Vorrichtung vorgesehen, bei der mittels Bestimmung einer mittleren Feldstärke ($f_1`(\tau)$, $f_2`(\tau)$,..., $f_i`(\tau)$) von jeder möglichen Frequenz ($i = 1,2,...,n$), mittels Auswahl einer Anzahl (N) von geeigneten Frequenzen und deren Mittelwert, ein Maß für die Qualität ermittelt wird. Abhängig von der Qualität wird eine erneute Bestimmung der mittleren Feldstärken jeder Frequenz zeitlich verschoben, um schneller oder langsamer auf Änderungen zu reagieren. Durch Auswahl der Werte guter Qualität, werden geringe Interferenzen mit dem überlagerten System erreicht.

Fig.

**Beschreibung**

Die Erfindung betrifft ein Verfahren und eine Vorrichtung zur Ermittlung und Auswahl von Frequenzen bei mindestens zwei sich überlagernden, gemeinsame Frequenzen benutzenden, zellularen Kommunikationssystemen. Insbesondere betrifft die Erfindung ein Verfahren und eine Vorrichtung zur Zuteilung von Frequenzen an ein zellulares Kommunikationssystem unter gleichzeitiger Vermeidung von Interferenzen zwischen zwei sich überlagernden, gemeinsame Frequenzen benutzenden Komunikationssystemen.

Aus dem Stand der Technik sind als zwei sich überlagernde Kommunikationssysteme, ein sogenanntes Inhaus-zellulares System und ein externes zellulares System außerhalb eines Gebäudes bekannt, bei dem die gleichen Frequenzen von beiden Systemen benutzt werden. Ein solches Inhaus-zellulares System wird auch als parasitäres System bezeichnet, da von dem externen zellularen Sytem profitiert wird, indem auf freie Frequenzen des externen Systems zugegriffen wird. Von solchen parasitären Systemen wird erwartet, daß sie mit niedrigen Feldstärken arbeiten, um Interferenzen mit dem überlagerten System zu vermeiden oder zu reduzieren. Gemäß dem Stand der Technik wird von einer sogenannten Macrozelle ausgehend für das Inhaus System berechnet, welche Kanäle, also Frequenzen, für eine weitere Benutzung zur Verfügung stehen. Ein wesentlicher Aspekt hierbei ist, festzustellen, welcher Art und beispielsweise bis zu welchem Stockwerk ein solches parasitäres System noch funktioniert. Desweiteren zeigt der Stand der Technik demgemäß, daß zwei sich überlagernde zellulare Systeme, die die gleichen Frequenzen benutzen, zusammen existieren und funktionieren können, wenn das Kommuniaktionssystem mit einer ausreichend großen Kapazität zur Verfügung gestellt wird („A Simulation Study of Urban In-Building Cellular Frequency Reuse"; T.S. Rappaport, R.A. Brickhouse; IEEE Personal Communications, Februar 1997, S. 19 - S. 23).

Der zuvor angeführte Stand der Technik zeigt demgemäß, daß zwei sich überlagernde, gemeinsame Frequenzen benutzende Kommunikationsysteme gemeinsam existieren können. Im allgemeinen wird bei der Ausbildung solcher Systeme davon ausgegangen, daß ein erstes zellulares Kommunikationsnetz existiert und daß ein solches erstes Kommunikationsnetz eine bestimmte zellulare Frequenzplanung aufweist. Demgemäß liegt der Erfindung die Aufgabe zugrunde, einem weiteren Kommunikationssystem, welches einem ersten Kommunikationssystem hinzugefügt wird und bei der Frequenzplanung des ersten Kommunikationssystems nicht berücksichtigt wird, passende Frequenzen zu ermitteln und zuzuteilen. Des Weiteren ist es Aufgabe der Erfindung solche Frequenzen bereitzustellen, die eine geringe Interferenz mit dem überlagerten zellulare Kommunikationssystem hervorrufen.

Dies wird erfindungsgemäß gelöst durch die lehre des Patentanspruchs 1 und 6. Vorteilhafte Verwendungen sind den Patentansprüchen 9 und 10 zu entnehmen.

Vorteilhaft erweist sich hierbei, daß das Verfahren und die Vorrichtung leicht zu implementieren sind und sich gut und schnell an wechselnde Umgebungsverhältnisse anpassen.

Weiter vorteilhaft erweist sich, daß dem weiteren zellularen Kommunikationssystem nur solche Frequenzen angeboten werden, die das überlagerte Kommunikationssystem nicht stören und nicht negativ beeinflussen, vielmehr von diesem gar nicht als Störung oder Eingriff festgestellt werden.

Weitere vorteilhafte Ausgestaltungen sind den Patentansprüchen 2 bis 5 und 7 bis 8 zu entnehmen.

Vorteilhaft gemäß Patentanspruch 3 erweist sich, daß für den Fall, daß der zeitliche Mittelwert unterhalb eines Schwellenwertes liegt, der zeitliche Abstand zwischen den Bestimmungen der mittleren Feldstärke reduziert wird, wodurch die Reaktionszeit erhöht wird, da ausreichend Frequenzen mit niedrigen Feldstärken vorhanden sind und eine schnelle Reaktion nicht notwendig ist. Für den Fall, daß der zeitliche Mittelwert der Feldstärken oberhalb eines Schwellenwertes liegt, wird der zeitliche Abstand zwischen den Bestimmungen der mittleren Feldstärken erhöht, um eine schnellere Reaktion auf Änderungen zu ermöglichen, um wieder eine ausreichende Anzahl an passenden Frequenzen anzubieten.

Vorteilhaft gemäß Patentanspruch 4 erweist sich, daß passende, ausgewählte Frequenzen in einer Liste dargestellt werden und als soche einfach an eine Mobilstation, beispielsweise ein Mobilfunkendgerät, übertragen werden können. Entsprechend vorteilhaft erweist sich dabei auch gemäß Patentanspruch 5, daß nur für den Fall, daß einer der Werte der Liste um einen Schwellenwert von dem vorherigen differiert, die vollständige Liste an die Mobilstation übertragen wird.

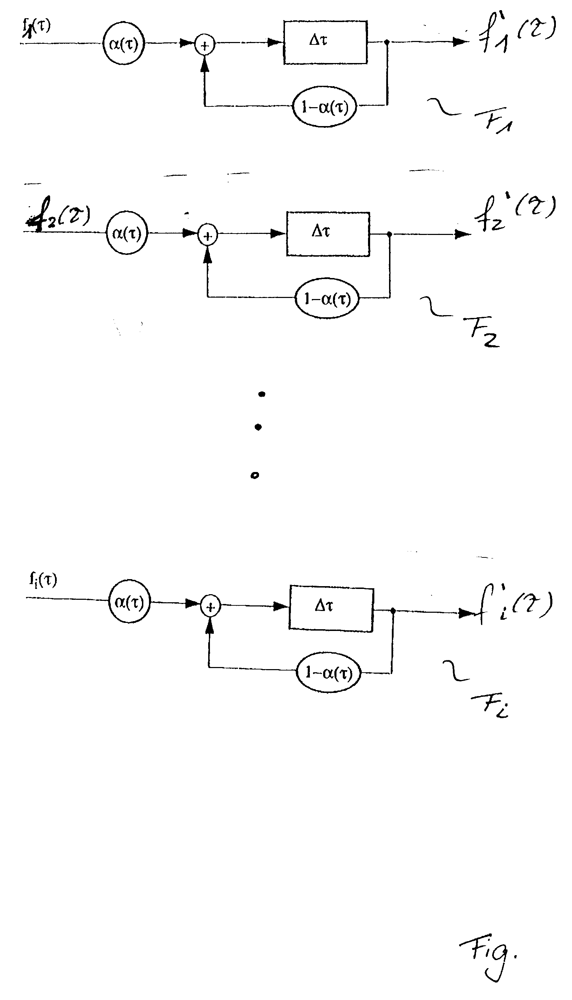

Im folgenden wird die Erfindung anhand von Ausführungsbeispielen und anhand der Figur näher erläutert.

Folgende Figur zeigt:

Fig.:     Darstellung adaptiver, rekursiver Filter in einer Vorrichtung zur Ermittlung und Auswahl von Frequenzen.

Ein erstes zellulares Kommunikationssystem ist beispielsweise über eine bestimmte geographische Fläche aufgespannt. In diesem System wird eine gewisse Bandbreite an Frequenzen zur Verfügung gestellt. Mindestens ein weiteres zellulares Kommunikationssystem befindet sich innerhalb dieser geographischen Fläche und arbeitet mit den gleichen Frequenzen. Die Bandbreite der vorhandenen Frequenzen soll also von beiden Systemen gemeinsam genutzt werden.

Das erste zellulare Kommunikationssystem ist beispeilsweise das öffentliche Mobilfunksystem nach dem GSM-Standard oder nach dem AMPS-Standard. Bei dem ersten zellularen Kommunikationssystem findet eine Frequenzplanung nach den bekannten Methoden statt. Demgemäß besteht eine feste Zuordnung von Frequenzen entsprechend der Planung. Das weitere zellulare Kommunikationssystem, beispielsweise ein weiteres zellulares Kommunikationsnetz nach den GSM-Standard oder dem AMPS-Standard, oder aber ein zellulares Kommunikationsnetz welches Charakteristika eines schnurlosen Kommunikationssytems, beispielsweise nach dem DECT-Standard aufweist, kann in die Frequenzplanung nicht mitaufgenommen werden. Ein Grund dafür kann sein, daß das weitere zellulare Kommunikationssystem erst zu einem späteren Zeitpunkt aufgebaut wird oder aber andere Verfahren der Frequenzzuteilung verwendet. Demgemäß kann die Frequenzzuteilung für das weitere Kommunikationssystem nicht unter der Kontrolle des ersten zellularen Kommunikationssystems erfolgen. Zur Auswahl von Frequenzen für das weitere Kommunikationssystem wird nach Ablauf eines zeitlichen Abstandes für jede Frequenz eine mittlere Feldstärke $f_1,...,f_i$ bestimmt mit i = 1,2,...,n gleich der Anzahl aller möglichen Frequenzen. Zur Vermeidung von Interferenzen zwischen den zellularen Kommunikationssystemen werden für das weitere zellulare Kommunikationssystem Frequenzen mit einer niedrigen mittleren Feldstärke als geeignet betrachtet. Demgemäß gibt die mittlere Feldstärke ein Maß für die Qualität der Frequenzen i in der Verwendung für das weitere Kommunikationssystem an. Entsprechend des Wertes der mittleren Feldstärke der Frequenzen wird eine Anzahl N von Frequenzen ausgewählt. Hierbei werden beispielsweise die Frequenzen mit den niedrigsten mittleren Feldstärken ausgewählt. Die Anzahl N der ausgewählten Frequenzen ist beliebig festlegbar.

Über die Anzahl N der ausgewählten Frequenzen i wird ein Mittelwert gebildet. In Abhängigkeit des Mittelwertes wird der zeitliche Abstand zur erneuten Bestimmung der mittleren Feldstärke jeder Frequenz verändert. Hierbei wird für den Fall, daß der Mittelwert oberhalb eines bestimmten Schwellenwertes liegt, also die Auswahl der Frequenzen durchschnittlich von schlechter Qualität ist, der zeitliche Abstand zur Bestimmung der mittleren Feldstärke jeder Frequenz verringert. Damit wird erreicht, daß schneller auf Änderungen reagiert werden kann. Für den Fall, daß der Mittelwert unterhalb eines bestimmten Schwellenwertes liegt, als die Auswahl der Frequenzen durchschnittlich von hoher Qualität ist, wird der zeitliche Abstand zur Bestimmung der mittleren Feldstärke jeder Frequenz vergrößert. In diesem Fall ist eine schnelle Reaktionszeit auf Änderungen nicht notwendig, da genügend geeignete Frequenzen vorhanden sind.

Die Auswahl der Frequenzen entsprechend des Wertes der mittleren Feldstärke kann beispielsweise in einer Liste zusammengefaßt werden. Eine solche Liste wird einem Mobilfunkendgerät zur Verfügung gestellt, um die verfügbaren geeigneten Frequenzen anzugeben. Zur Vermeidung eines zu häufigen und unnötigen erneuten Bereitstellung in dem Mobilfunktendgerät wird eine neue Liste nur dann übertragen, wenn die mittlere Feldstärke mindestens einer der Frequenzen um mehr als einen Schwellenwert differiert. Hiermit wird erreicht, daß nur im Falle auftretender wesentlicher Änderungen dies dem Mobilfunkendgerät mitgeteilt wird.

Im folgenden wird näher erläutert, wie eine erfindungsgemäße Vorrichtung zur Ermittlung und Auswahl von Frequenzen ausgebildet ist (ohne Figur).

Eine Vorrichtung zur Ermittlung und Auswahl von Frequenzen für mindestens ein zweites zellulares Kommunikationssystem in einem ersten zellularen Kommunikationssystem, bei zwei sich überlagernden, gemeinsame Frequenzen benutzenden, zellularen Kommunikationssystemen weist Mittel zur Bestimmung einer mittleren Feldstärke $f_1{}'(\tau)$, $f_2{}'(\tau),...,f_i{}'(\tau)$ auf. Für jede Frequenz i = 1,2,...,n wird jeweils der Wert der mittleren Feldstärke innerhalb eines bestimmten Zeitabstandes ermittelt.

Die Vorrichtung verfügt über Mittel zur Auswahl einer Anzahl N von geeigneten Frequenzen. In Abhängigkeit von dem Wert der mittleren Feldstärke werden die geeigneten N Frequenzen ausgewählt. Hierbei werden beispielsweise diejenigen Frequenzen ausgewählt deren mittlere Feldstärke die niedrigsten Werte aufweisen, da diese geeignet sind. Die Anzahl N der ausgewählten Frequenzen ist auf einen beliebigen Wert festlegbar.

Weiter weist die Vorrichtung Mittel zur Bildung eines Mittelwertes auf. Hierbei wird ein Mittelwert über die Feldstärken der Anzahl der ausgewählten Frequenzen gebildet, um einen Überblick über die aktuellen ausgewählten Frequenzen zu haben, und um die Qualität der ausgewählten Frequenzen zu ermitteln. Hierbei wird beispielsweise davon ausgegangen, daß die Qualität gut ist, wenn der Mittelwert der Feldstärken der ausgewählten Frequenzen niedrig ist. Entsprechend wird davon ausgegangen, daß die Qualität schlecht ist, wenn der Mittelwert der Feldstärken der ausgewählten Frequenzen hoch ist. Zur Differenzierung wird ein Schwellenwert definiert und als Schwellenwert für eine gute und eine schlechte Qualität angegeben. Dieser Schwellenwert muß kein diskreter Wert sein, kann vielmehr eine Funktion darstellen. Die Vorrichtung weist weiter Mittel zur Änderung des Zeitabstandes für die Mittel zur Bestimmung der mittleren Feldstärke für jede Frequenz auf. Hierbei wird der Zeitabstand bis zur erneuten Ermittlung der mittleren Feldstärke jeder Frequenz vergrößert, wenn die Qualität hoch ist, der Mittelwert über die ausgewählten Frequenzen also niedrig ist, also unterhalb eines Schwellenwertes liegt. Für den Fall, daß die Qualität niedrig ist, der Mittelwert also hoch ist, wird der Zeitabstand reduziert, um eine schnellere Raektion auf Änderungen zuzulassen.

Weiter weist die Vorrichtung noch Mittel zur Erstellung und Bereitstellung einer Liste von ausgewählten Frequenzen auf. Hierbei können beispielsweise die Frequenzen mit den niedrigsten Mittelwerten der Feldstärke zusammengefaßt werden und in Form einer Liste dargestellt werden und übertragen werden. In der Anwendung bei zellularen Kommunikationssystemen, wie z. B. einem GSM Mobilfunknetz, wird eine solche Liste in der Basistation erstellt und an das Mobilfunkendgerät übertragen. Beispielsweise sind in der Liste die Frequenzen in der Reihenfolge der niedrigsten ermittelten Werte der Feldstärke aufgelistet. In regelmäßigen Zeitabständen wird die Liste erneuert. Hiebei kann aber beispielsweise folgender Fall auftreten. Die Reihenfolge der Frequenzen innerhalb der Liste ändert sich, aber die Werte der Frequenzen differieren nur geringfügig. In diesem Fall soll aber keine neue Liste an das Mobilfunkendgerät gesendet werden, da keine relevante Information für das Gerät vorliegt. Nur für den Fall, daß eine Änderung größer als ein festgelegter Schwellenwert vorliegt, wird die neue Liste an das Mobilfunkendgerät übertragen.

Im folgenden wird eine Ausgestaltung der Erfindung anhand der Figur näher erläutert. Eine Vorrichtung zur Ermittlung und Auswahl von Frequenzen besteht vorzugsweise aus einem adaptiven, rekursiven Filter $F_1, F_2, ..., F_i$, mit i = .1,2,...n gleich der Anzahl möglicher Frequenzen. Für jede Frequenz i wird ein adaptives rekursives Filter $F_1, F_2, ..., F_i$, eingesetzt. Am Ausgang des Filters liegt die mittlere Feldstärke jeder Frequenz an. Die Vorrichtung teilt dem weiteren zellularen Kommunikationssystem unter Verwendung eines sogenannten Adaptive Frequency Allocation (AFA) - Algorithmus, im folgenden kurz AFA-Algorithmus genannt, Frequenzen zu. Als Basis für den AFA-Algorithmus dienen ermittelte Feldstärkenwerte $f_{i,d}$ in der Abwärtsstrecke (downlink) und $f_{i,u}$ in der Aufwärtsstrecke (uplink). Die Werte $f_{i,d}$ in der Abwärtsstrecke und $f_{i,u}$ in der Aufwärtsstrecke stellen Mittelwerte dar. Der Übersicht halber werden die zwei Werte zu einem Wert $f_i$ zusammengefaßt. Die Zeit die benötigt wird die Feldstärke aller Frequenzen zu messen, wird als Meßperiode der Länge $\Delta\tau$ bezeichnet. $\Delta\tau$ ist ein konstanter Wert. $\tau$ ist der Zeitpunkt nach der aktuellen Messung der Werte der Feldstärke jeder Frequenz.

An jedem der Filter $F_1, F_2, ..., F_i$ liegt am Eingang jeweils eine entsprechende gemessene Feldstärke $f_1(\tau)$, $f_2(\tau), ..., f_i(\tau)$ zum Zeitpunkt $\tau$ an. Des Weiteren weist jedes Filter einen Koeffizienten $\alpha(\tau)$ auf. Dieser Koeffizienten ist ein sogenannter ereignisgesteuerter, zeitabhängiger Koeffizient.

Am Ausgang eines jeden Filters liegt jeweils eine mittlere Feldstärke $f_1`(\tau)$, $f_2`(\tau), ..., f_i`(\tau)$ jeder Frequenz an. Die so gefilterten, mittleren Feldstärken $f_1`(\tau)$, $f_2`(\tau), ..., f_i`(\tau)$ bestimmen sich zu

$$f_i`(\tau) = \alpha_i(\tau) * f_i`(\tau) + (1 - \alpha_i(\tau)) * f_i`(\tau - \Delta\tau) \qquad (1)$$

mit i = 1, 2,...,n
$f_i'(\tau -\Delta\tau)$ gibt die in der Zeitperiode zuvor ermittelte mittlere Feldstärke an.

Weiter soll noch angeführt werden, daß für den Fall, daß eine der aktuell gemessenen Feldstärken größer ist als eine zuvor bestimmte mittlerer Feldstärke der gleichen Frequenz, keine Filterung erfolgt. Der Ausgangswert des Filters wird dann aber gleich dem Eingangswert gesetzt. Der Einsatz und die Wirkungsweise des zuvor erläuterten Filters ist beispielsweise

folgendermaßen. Wie zuvor erläutert, wird in Abhängigkeit des Mittelwertes, der über die Feldstärken der ausgewählten Frequenzen gebildet wird, der zeitliche Abstand der Bestimmung der mittleren Feldstärke jeder Frequenz verändert. Dies erfolgt folgendermaßen. Für den Fall, daß der Mittelwert der mittleren Feldstärke der ausgewählten Frequenzen niedrig ist, also beispielsweise unterhalb eines Schwellenwertes liegt, wird die Annahme getroffen, daß die Qualität der Frequenzen gut ist. Für diesen Fall ist eine lange Reaktionszeit des Filters auf Änderung ausreichend, weshalb der Koeffizient $\alpha$ auf einen Wert nahezu 0 gesetzt wird. In dem umgekehrten Fall, daß die Qualität schlecht ist, wird der Koeffizient $\alpha$ auf einen Wert nahezu 1 gesetzt. Die Koeffizienten $\alpha$ aller Filter werden auf den gleichen Wert eingestellt, weshalb alle Filter mit den gleichen Zeitabständen arbeiten. .

Genau definiert bestimmt sich also der Koeffizient $\alpha$ folgendermaßen.

$$\alpha(\tau) = z\left(\frac{1}{N}\sum_{k}^{N} f_k'(\tau)\right) \qquad (2)$$

Mit N gleich der Anzahl der ausgewählten Frequenzen und z einem Wert abhängig von der Qualität und dem Schwellenwert, der den Unterschied zwischen guter und schlechter Qualität angibt. z kann eine beliebig Funktion darstellen, muß also nicht notwendigerweise eine lineare Funktion darstellen. Demgemäß wird der Koeffizient $\alpha$ solcherart bestimmt, daß er als ereignisgesteuerter, zeitabhängiger Koeffizient wirkt.

Gemäß Patentanspruch 5 wurde erläutert, daß die Bereitstellung einer neuen Liste für den Fall erfolgt, daß der Wert einer mittleren Feldstärke einer ausgewählten Frequenz der Liste um mehr als einen Schwellenwert erfolgt. Wie bereits zuvor erläutert existieren signifikante Änderungen und weniger signifikante Änderungen, die keinen großen Einfluß haben. Zur Feststellung, ob eine Änderung signifikant ist, muß ein Vergleich zwischen vorhergehendem und aktuellem Wert erfolgen und ein Schwellenwert muß definiert werden.

Verwendung findet ein solches erfindungsgemäßes Verfahren und eine Vorrichtung beispielsweise bei zwei sich überlagernden zellularen Mobilfunknetzen. Beispielsweise wird einem bereits weit erstreckten zellularen Mobilfunksystem das nach dem GSM-Standard arbeitet ein weiteres aber geographisch begrenztes Mobilfunknetz überlagert. Dies tritt beispielsweise dann auf, wenn dem öffentlichen GSM-Mobilfunknetz ein privates Mobilfunknetz innerhalb einer Stadt, eines Geländes oder innerhalb eines Gebäudes überlagert werden soll.

Eine Verwendung ist auch, wenn einem solchen öffentlichen Mobilfunknetz ein Kommunikationssystem das nach einem schnurlosen Standard, aber auf gleicher Frequenz mit dem öffntichen Mobilfunknetz arbeitet, überlagert ist.

**Patentansprüche**

1. Verfahren zur Ermittlung und Auswahl von Frequenzen für mindestens ein zweites zellulares Kommunikationssystem in einem ersten zellularen Kommunikationssystem bei zwei sich überlagernden, gemeinsame Frequenzen benutzenden, zellularen Kommunikationssystemen,
   **dadurch gekennzeichnet, daß**

   nach Ablauf eines zeitlichen Abstandes jeweils eine mittlere Feldstärke ($f_1`(\tau)$, $f_2`(\tau)$,..., $f_i`(\tau)$) jeder Frequenz (i = 1,2,...,n) bestimmt wird,
   eine Anzahl (N) von Frequenzen entsprechend des Wertes der mittleren Feldstärke ausgewählt wird,
   über die Feldstärken der ausgewählten Anzahl von Frequenzen ein Mittelwert gebildet wird,
   und in Abhängigkeit des Mittelwertes, der zeitliche Abstand der Bestimmung der mittleren Feldstärke Feldstärke ($f_1`(\tau)$, $f_2`(\tau)$,..., $f_i`(\tau)$) jeder Frequenz verändert wird.

2. Verfahren nach Anspruch 1, bei dem

   eine Anzahl (N) von Frequenzen mit den niedrigsten mittleren Feldstärken ausgewählt werden.

3. Verfahren nach Anspruch 1 oder 2, bei dem

   für den Fall, daß der Mittelwert der Feldstärke der ausgewählten Frequenzen unterhalb eines Schwellenwertes liegt, der zeitliche Abstand vergrößert wird und für den Fall, daß der Mittelwert oberhalb eines Schwellenwertes liegt, der zeitliche Abstand verkleinert wird.

4. Verfahren nach einem der Ansprüche 1 bis 3, bei dem eine Bereitstellung einer Liste ausgewählter Frequenzen erstellt und den Kommunikationssystemen bereitgestellt wird.

5. Verfahren nach Anspruch 4, bei dem eine Bereitstellung einer neuen Liste für den Fall erfolgt, daß der Wert einer mittleren Feldstärke einer ausgewählten Frequenz der Liste um mehr als einen Schwellenwert von der vorherigen differiert.

6. Vorrichtung zur Ermittlung und Auswahl von Frequenzen für mindestens ein zweites zellulares Kommunikationssystem in einem ersten zellularen Kommunikationssystem, bei zwei sich überlagernden, gemeinsame Frequenzen benutzenden, zellularen Kommunikationssystemen,
   **gekennzeichnet durch**

   Mittel zur Bestimmung jeweils einer mittleren Feldstärke ($f_1`(\tau)$, $f_2`(\tau)$,..., $f_i`(\tau)$) für jede Frequenz (i) innerhalb eines Zeitabstandes,
   Mittel zur Auswahl einer Anzahl (N) von Frequenzen entsprechend des Wertes der mittleren Feldstärke,
   Mittel zur Bildung eines Mittelwertes der mittleren Feldstärke ($f_1`(\tau)$, $f_2`(\tau)$,..., $f_i`(\tau)$) der ausgewählten Frequenzen,
   Mittel zur Auswahl einer Anzahl von Frequenzen (N) entsprechend des Mittelwertes, und Mittel ($\alpha$) zur Änderung des Zeitabstandes zwischen den Bestimmungen der mittleren Feldstärke jeder Frequenz.

7. Vorrichtung nach Anspruch 4, bei der die Mittel ein adaptives, rekursives Filter für jede Frequenz sind.

8. Vorrichtung nach Anspruch 6 oder 7, mit Mitteln zur Erstellung und Bereitstellung einer ausgewählten Liste von Frequenzen.

9. Verwendung der Vorrichtung nach Anspruch 6 zur Frequenzzuteilung in zwei sich überlagernden zellularen Kommunikationssystem nach dem GSM-Standard oder in zwei sich überlagernden zellularen Kommunikationssystemen nach dem DECT-Standard.

10. Verwendung der Vorrichtung nach Anspruch 6 zur Frequenzzuteilung in sich überlagernden zellularen Kommunikationssystemen nach dem GSM-Standard und nach einem zellularen Kommunikationssystem entsprechend einem schnurlosen Standard.

Fig.

**Europäisches Patentamt**

# EUROPÄISCHER RECHERCHENBERICHT

Nummer der Anmeldung

EP 97 10 7719

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | WO 96 31075 A (NORTHERN TELECOM LTD)<br>* Seite 8, Zeile 16 - Zeile 20 *<br>* Seite 10, Zeile 1 - Zeile 31 *<br>* Seite 11, Zeile 12 - Zeile 19 *<br>* Seite 12, Zeile 7 - Zeile 10 *<br>* Zusammenfassung; Ansprüche 8,13,14 *<br>--- | 1,2,6 | H04Q7/36<br>H04Q7/22 |
| A | WO 96 31989 A (ERICSSON TELEFON AB L M)<br>* Seite 3, Zeile 27 - Seite 4, Zeile 2 *<br>* Seite 4, Zeile 35 - Seite 5, Zeile 4 *<br>* Seite 6, Zeile 26 - Seite 7, Zeile 21 *<br>* Seite 10, Zeile 32 - Zeile 34 *<br>* Seite 17, Zeile 22 - Seite 18, Zeile 26 *<br>* Seite 19, Zeile 4 - Zeile 31 *<br>* Ansprüche 7,9,16,18; Abbildung 6 *<br>--- | 1,2,6,7 | |
| A | WO 96 29832 A (PACIFIC COMM SCIENCES INC)<br>* Seite 4, Zeile 5 - Zeile 8 *<br>* Seite 10, Zeile 26 - Seite 11, Zeile 15 *<br>* Seite 13, Zeile 22 - Zeile 26 *<br>* Zusammenfassung; Abbildungen 10A,10C *<br>----- | 1,4,6,8 | |

RECHERCHIERTE SACHGEBIETE (Int.Cl.6)

H04Q

Der vorliegende Recherchenbericht wurde für alle Patentansprüche erstellt

| Recherchenort | Abschlußdatum der Recherche | Prüfer |
|---|---|---|
| DEN HAAG | 19.November 1997 | Coppieters, S |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................

& : Mitglied der gleichen Patentfamilie, übereinstimmendes Dokument